# EUROPEAN PATENT SPECIFICATION

(11) **EP 1 699 876 B1**
(45) Date of publication and mention of the grant of the patent: **22.07.2009**
(21) Application number: 04820830.0
(22) Date of filing: 30.12.2004
(51) Int. Cl.: C08L 95/00

(54) **USING EXCESS LEVELS OF METAL SALTS TO IMPROVE PROPERTIES WHEN INCORPORATING POLYMERS IN ASPHALT**
VERWENDUNG VON ÜBERSCHUSSMENGEN VON METALLSALZEN ZUR VERBESSERUNG VON EIGENSCHAFTEN BEI DER EINARBEITUNG VON POLYMEREN IN ASPHALT
UTILISATION DE NIVEAUX EXCEDENTAIRES DE SELS METALLIQUES POUR L'AMELIORATION DES PROPRIETES LORS DE L'INCORPORATION DE POLYMERES DANS L'ASPHALTE

(30) Priority: 31.12.2003 US 749259
(43) Date of publication of application: 13.09.2006
(73) Proprietor: TOTAL RAFFINAGE MARKETING, 92800 Puteaux (FR)
(72) Inventor: BUTLER, James, R., Friendswood, TX 77546 (US); BURAS, Paul, J., West University Place, TX 77005 (US); LEE, William, Humble, TX 77346 (US)
(74) Representative: Cabinet Plasseraud
(86) International application number: PCT/EP2004/014914
(87) International publication number: WO 2005/063892

(56) References cited:
- EP-A- 0 618 275
- US-A- 4 069 181
- US-A1- 2004 030 008
- US-B1- 6 180 697

## Description

### Field of the Invention

The present invention is related to hydrocarbon-based binders, such as bitumens, asphalts and tars, modified with elastomers, and including a vulcanized stage, which are particularly useful as industrial coatings and road bitumens, or the like. It relates more particularly to processes for obtaining vulcanized compositions based on bitumens and on styrene/butadiene copolymers that have excess amounts of metal salts therein.

### Background of the Invention

The use of bitumen (asphalt) compositions in preparing aggregate compositions (including, but not just limited to, bitumen and rock) useful as road paving material is complicated by at least three factors, each of which imposes a serious challenge to providing an acceptable product. First, the bitumen compositions must meet certain performance criteria or specifications in order to be considered useful for road paving. For example, to ensure acceptable performance, state and federal agencies issue specifications for various bitumen applications including specifications for use as road pavement. Current Federal Highway Administration specifications require a bitumen (asphalt) product to meet defined parameters relating to properties such as viscosity, stiffness, penetration, toughness, tenacity and ductility. Each of these parameters defines a critical feature of the bitumen composition, and compositions failing to meet one or more of these parameters will render that composition unacceptable for use as road pavement material.

Conventional bitumen compositions frequently cannot meet all of the requirements of a particular specification simultaneously and, if these specifications are not met, damage to the resulting road can occur, including, but not necessarily limited to, permanent deformation, thermally induced cracking and flexural fatigue. This damage greatly reduces the effective life of paved roads.

In this regard, it has long been recognized that the properties of conventional bitumen compositions can be modified by the addition of other substances, such as polymers. A wide variety of polymers has been used as additives in bitumen compositions. For example, copolymers derived from styrene and conjugated dienes, such as butadiene or isoprene, are particularly useful, since these copolymers have good solubility in bitumen compositions and the resulting modified-bitumen compositions have good rheological properties.

It is also known that the stability of polymer-bitumen compositions can be increased by the addition of crosslinking agents (vulcanizing agents) such as sulfur, frequently in the form of elemental sulfur. It is believed that the sulfur chemically couples the polymer and the bitumen through sulfide and/or polysulfide bonds. The addition of extraneous sulfur is used to produce the improved stability, even though bitumens naturally contain varying amounts of native sulfur.

Thus, there is known a process for preparing a bitumen-polymer composition consisting of mixing a bitumen, at 266-446°F (130-230°C), with 2 to 20% by weight of a block or random copolymer, having an average molecular weight between 30,000 and 300,000. The resulting mixture is stirred for at least two hours, and then 0.1 to 3% by weight of sulfur relative to the bitumen is added and the mixture agitated for at least 20 minutes. The quantity of added sulfur may be 0.1 to 1.5% by weight with respect to the bitumen. The resulting bitumen-polymer composition is used for road-coating, industrial coating, or other industrial applications.

Similarly, there is also known an asphalt (bitumen) polymer composition obtained by hot-blending asphalt with 0.1 to 1.5% by weight of elemental sulfur and 2 to 7% by weight of a natural or synthetic rubber, which can be a linear butadiene/styrene copolymer. A process is additionally known for preparing a rubber-modified bitumen by blending rubber, either natural or synthetic, such as styrene/butadiene rubber, with bitumen at 293-365°F (145-185°C), in an amount up to 10% by weight based on the bitumen, then intimately blending into the mix an amount of sulfur such that the weight ratio of sulfur to rubber is between 0.01 and 0.9. A catalytic quantity of a vulcanization-accelerator is then added to effect vulcanization. A critical nature of the sulfur to rubber ratio is sometimes reported, for instance that weight ratios of sulfur to rubber of less than 0.01 gives modified bitumen of inferior quality.

The second factor complicating the use of bitumen compositions concerns the viscosity stability of such compositions under storage conditions. In this regard, bitumen compositions are frequently stored for up to 7 days or more before being used and, in some cases, the viscosity of the composition can increase so much that the bitumen composition is unusable for its intended purpose. On the other hand, a storage-stable bitumen composition would provide for only minimal viscosity increases and, accordingly, after storage it can still be employed for its intended purpose.

Asphaltic concrete, typically including asphalt and aggregate, asphalt compositions for resurfacing asphaltic concrete, and similar asphalt compositions must exhibit a certain number of specific mechanical properties to enable their use in various fields of application, especially when the asphalts are used as binders for superficial coats (road surfacing), as asphalt emulsions, or in industrial applications. (The term "asphalt" is used herein interchangeably with "bitumen." Asphaltic concrete is asphalt used as a binder with appropriate aggregate added, typically for use in roadways.) The use of asphalt or asphalt emulsion binders either in maintenance facings as a surface coat or as a very thin bituminous mix, or as a thicker structural layer of bituminous mix in asphaltic concrete, is enhanced if these binders possess the requisite properties such as desirable levels of elasticity and plasticity.

As noted, various polymers have been added to asphalts to improve physical and mechanical performance properties. Polymer-modified asphalts (PMAs) are routinely used in the road construction/maintenance and roofing industries. Conventional asphalts often do not retain sufficient elasticity in use and, also, exhibit a plasticity range that is too narrow for use in many modem applications such as road construction. It is known that the characteristics of road asphalts and the like can be greatly improved by incorporating into them an elastomeric-type polymer which may be one such as butyl, polybutadiene, polyisoprene or polyisobutene rubber, ethylene/vinyl acetate copolymer, polyacrylate, polymethacrylate, polychloroprene, polynorbornene, ethylene/propylene/diene (EPDM) terpolymer and advantageously a random or block copolymer of styrene and a conjugated diene. The modified asphalts thus obtained commonly are referred to variously as bitumen/polymer binders or asphalt/polymer mixes. Modified asphalts and asphalt emulsions typically are produced utilizing styrene/butadiene based polymers, and typically have raised softening point, increased viscoelasticity, enhanced force under strain, enhanced strain recovery, and improved low temperature strain characteristics as compared with non-modified asphalts and asphalt emulsions.

The bituminous binders, even of the bitumen/polymer type, which are presently employed in road applications often do not have the optimum characteristics at low enough polymer concentrations to consistently meet the increasing structural and workability requirements imposed on roadway structures and their construction. In order to achieve a given level of modified asphalt performance, various polymers are added at some prescribed concentration.

Current practice is to add the desired level of a single polymer, sometimes along with a reactant that promotes crosslinking of the polymer molecules until the desired asphalt properties are met. This reactant typically is sulfur in a form suitable for reacting.

In preparing the composition, significant mixing is needed to insure the uniform addition of the polymer and any crosslinking agents, accelerators or activators. The crosslinking agents and other agents are usually added as a dry powder and mixed with the asphalt compositions.

One of the methods commonly utilized in the industry to standardize the measure or degree of compatibility of the rubber with the asphalt is referred to as the compatibility test. The test comprises the mixing of the rubber and asphalt with all the applicable additives, such as the crosslinking agents. The mixture is placed in tubes, usually made of aluminum or similar material, referred to as cigar tubes or toothpaste tubes. These tubes are about one inch in diameter and about fifteen centimeters deep. The mixture is placed in an oven heated to a temperature of about 162°C (320°F). This temperature is representative of the most commonly used asphalt storage temperature. After the required period of time, most commonly twenty-four (24) hours, the tubes are transferred from the oven to a freezer and cooled down to solidify. The tubes are kept in the vertical position. After cooling down, the tubes are cut into thirds; three equal sections. The ring-and-ball softening point of the top one third is compared to the softening point of the bottom section. This test gives an indication of the separation or compatibility of the rubber within the asphalt. The rubber would have the tendency to separate to the top. The lower the difference in softening point between the top and bottom sections, the more compatible are the rubber and asphalt. In today's environment, most states require a difference of 4°F (2°C) or less to consider the asphalt/rubber composition as compatible. Few standards allow a higher difference. The twenty-four hour test is used as a common comparison point. An example test method is contained in Louisiana DOTD TR 326, "Separation of Polymer." An additional concern in the production of PMA is that the composition of the asphalt component can vary widely and occasionally the conventional methods of making the PMA do not meet the compatibility criteria mentioned because something is sufficiently different about the asphalt that makes it more difficult to incorporate the polymer therein. Since there are many different polymers that can be used and many ways of altering the techniques to make them, sometimes the use of a different polymer can provide better compatibility to the problematic asphalt. Changing the crosslinker system is another way trying to solve compatibility concerns. Despite the known approaches of solving compatibility issues, there is always the need for additional techniques to use when these difficulties arise.

US 4,069,181 B1 relates to asphalt cement compositions which contain EPDM or EPM elastomers. These EPDM or EPM elastomers are used to improve the properties of the asphalts, however it is known that these elastomers are incompatible: if allowed to stand at elevated temperatures, the EPDM or EPM will float to the surface of the asphalt cement. To overcome this difficulty, EPDM or EPM elastomer is loaded with carbon black chosen so that it presents high dibutyl phthalate (DBP) adsorption value. Thus loaded, the EPDM or EPM elastomer has a specific gravity substantially equal to the specific gravity of the asphalt cement (col. 1, 1. 40-45). The compatibility concerns are solved through a physical means, *i*.*e*. by increasing the specific gravity of the EPDM or EPM elastomer with a bulking agent (carbon black). The polymer modified asphalt (PMA) compositions according to US 4,069,181 B1 do not comprise metal oxide.

US 6,180,697 B1 relates to a method for preparing an asphalt and thermoplastic elastomer composition. The method comprises heating and stirring an asphalt cut. Then, a thermoplastic elastomer, preferably a styrene butadiene copolymer, is added to the composition while stirring. The stirring speed is reduced and the temperature is increased to add a crosslinking agent which comprises zinc mercaptobenzothiazole (ZMBT) and sulfur (elemental sulfur or sulfur donating compound). Zinc oxide may also be added (Table 2, 3, 5, col. 10-12). US 6,180,697 B1 discloses various PMA compositions containing e.g 0.2wt% ZMBT and 0.1025wt% ZMBT plus 0.2wt% ZnO, respectively, which is in the above mentioned range. But it does not disclose compositions comprising over 0.3wt% of metal oxide: the range over 0.3wt% up to 5wt% of metal oxide.

EP 0 618 275 relates to a polymer-modified sulfonated asphalt composition and a method of preparation of this composition. According to EP 0 618 275, polymer and asphalt blends that are normally incompatible can be made into compatible blends: they do not segregate on standing at elevated temperatures or under storage conditions (p. 2,1. 36-41). The compositions comprises a mixture of (1) an asphalt containing sulfonate or sulfonic acid groups, (2) a sulfonated polymer, and (3) a base neutralizing agent to for a neutral blend of polymer modified asphalt (PMA). Sulfonation of the asphalt or of the polymer is achieved using concentrated or 50% sulfuric acid, or oleum (which is a solution of SO₃ in anhydrous sulfuric acid H₂SO₄). The composition according to EP 0 618 275, the asphalt and polymers are sulfonated, i.e. they bear -S(=O)₂-OH or -S(=O)₂-O-R groups linked to carbon atoms of the asphalt or the polymer. The compositions according to EP 0 618 275 do not contain sulfur or sulfur donating crosslinkers leading to sulfide and/or polysulfide bonds (p. 2, 1. 10-11) R-(S)ₙ-R' where R and R' are organic groups, where the sulfur atom is linked to carbon atoms of R and R', and where n ranges generally between 1 and 10.

As can be seen from the above, methods are known to improve the mixing of asphalt and polymer compositions. The needed elements for the commercial success of any such process include keeping the process as simple as possible, reducing the cost of the ingredients, and utilizing available asphalt cuts from a refinery without having to blend in more valuable fractions. In addition, the resulting asphalt composition must meet the above-mentioned environmental concerns and governmental physical properties, such as compatibility. Thus, it is a goal of the industry to maintain or reduce the cost of the polymers and crosslinking agents added to the asphalt without sacrificing any of the other elements and improving the properties of the asphalt and polymer compositions as much as possible.

### Summary of the Invention

There is provided, in one form, a method for preparing asphalt and polymer compositions comprising: heating a mixture of asphalt and an elastomeric polymer; and adding a metal oxide in excess of amounts of an organic or inorganic metal salt used as an activator, where the metal of the metal oxide is selected from the group consisting of zinc, cadmium, mercury, copper, silver, nickel, platinum, iron, magnesium, and mixtures thereof, and where the amount of metal oxide is over 0.3 wt% up to 5 wt% based on the weight of asphalt/polymer mixture, further comprising adding a crosslinker to the mixture, where the crosslinker is selected from the group consisting of a sulfur-containing derivative and elemental sulfur and mixtures thereof.

In this method, the compatibility of the asphalt and polymer composition is improved as compared with the compatibility of an identical asphalt and polymer composition having a metal oxide amount used when the metal oxide is used as an activator. The method of using excess amounts of metal oxides of this invention also helps reduce gel formation in the asphalt/polymer compositions. In an alternative embodiment of the invention, there is further provided a method for preparing asphalt and polymer compositions involving heating a mixture of asphalt and an elastomeric polymer. A metal oxide is added to the mixture in excess of amounts of metal oxide used as an activator, where the metal of the metal oxide is selected from Groups IIA and IIB of the Periodic Table (CAS notation). Ground tire rubber (GTR) is added to the mixture of asphalt and an elastomeric polymer before or after the metal oxide is added to the mixture. In this embodiment, the GTR and mixture of asphalt and an elastomeric polymer is more homogeneous as compared to an identical mixture of GTR, asphalt and elastomeric polymer having an amount of metal oxide when the metal oxide is used as an activator.

In another non-limiting embodiment of the invention, a polymer modified asphalt (PMA) composition includes an asphalt, an elastomeric polymer; and a metal oxide present in an amount (optionally up to 5 wt% total) in excess of an amount of metal salt used as an activator, where the metal of the metal oxide is selected from the group consisting of zinc, cadmium, mercury, copper, silver, nickel, platinum, iron, magnesium, and mixtures thereof, and where the amount of metal oxide is over 0.3 wt% up to 5 wt% based on the weight of the asphalt/polymer mixture.

### Detailed Description of the Invention

It has been surprisingly discovered that the use of excess amounts of metal oxides such as zinc oxide and calcium oxide, when an organic or inorganic metal salt is used as an activator, can enhance the compatibility (as defined above) of certain asphalt and polymer combinations, particularly when the asphalt and the polymer are crosslinked. It has also been unexpectedly found that excess amounts of metal oxides can help incorporate ground tire rubber into asphalt to make a more homogeneous mixture whether or not the asphalt and polymer are crosslinked. The method of using excess amounts of metal oxides herein also helps reduce gel formation in the asphalt/polymer compositions, as compared with compositions where only normal amounts of metal oxides are used. It is not necessary for gel to be eliminated entirely for the method of this invention to be considered successful.

To more fully explain the advantages of the present invention, it is helpful to review several terms used herein.

As used herein, the term "bitumen" (sometimes referred to as "asphalt") refers to all types of bitumens, including those that occur in nature and those obtained in petroleum processing. The choice of bitumen will depend essentially on the particular application intended for the resulting bitumen composition. Bitumens that can be used can have an initial viscosity at 140°F (60°C) of 600 to 3000 poise (60 to 300 Pa-s) depending on the grade of asphalt desired. The initial penetration range (ASTM D5) of the base bitumen at 77°F (25°C) is 20 to 320 dmm, and can be 50 to 150 dmm, when the intended use of the copolymer-bitumen composition is road paving. Bitumens that do not contain any copolymer, sulfur, etc., are sometimes referred to as a "base bitumen."

"Elastomeric polymers" are natural or synthetic rubbers and include, but are not necessarily limited to, butyl, polybutadiene, polyisoprene or polyisobutene rubber, ethylene/vinyl acetate copolymer, polyacrylate, polymethacrylate, polychloroprene, polynorbornene, ethylene/propylene/diene (EPDM) terpolymer and advantageously a random or block copolymer of a vinyl aromatic compound, e.g. styrene, and conjugated dienes. In one non-limiting embodiment of the invention, styrene/conjugated diene block copolymers may be used that are linear, radial, or multi-branched. Styrene/butadiene and styrene/isoprene copolymers having an average molecular weight of between 30,000 and 300,000 have been found to be particularly useful in the present invention.

"Conjugated dienes" refer to alkene compounds having 2 or more sites of unsaturation wherein a second site of unsaturation is conjugated to a first site of unsaturation, *i.e.,* the first carbon atom of the second site of unsaturation is gamma (at carbon atom 3) relative to the first carbon atom of the first site of unsaturation. Conjugated dienes include, by way of non-limiting example, butadiene, isoprene, 1,3-pentadiene, and the like.

"Block copolymers of styrene and conjugated-dienes" refer to copolymers of styrene and conjugated-dienes having a linear or radial, tri-block structure consisting of styrene-conjugated diene-styrene block units that are copolymers are represented by the formula:

Sₓ-D_{y}-S_{z}

where D is a conjugated-diene, S is styrene, and x, y and z are integers such that the number average molecular weight of the copolymer is from about 30,000 to about 500,000. These copolymers are well known to those skilled in the art and are either commercially available or can be prepared from methods known in the art. Such tri-block copolymers may be derived from styrene and a conjugated-diene, wherein the conjugated-diene is butadiene or isoprene. Such copolymers may contain 15 to 50 percent by weight copolymer units derived from styrene, alternatively may contain 20 to 35 percent derived from styrene, and then again may contain 28 to 31 percent derived from styrene, the remainder being derived from the conjugated diene. These copolymers may have a number average molecular weight range between 50,000 and 400,000, and alternatively have a number average molecular weight range between 80,000 and 180,000. The copolymer can employ a minimal amount of hydrocarbon solvent in order to facilitate handling. Examples of suitable solvents include plasticizer solvent that is a non-volatile aromatic oil. However, when the hydrocarbon solvent is a volatile solvent (as defined above), care should be taken to ensure that the amount of solvent contained in the final bitumen composition is less than about 3.5 weight percent.

The term "sulfur" is defined herein as elemental sulfur in any of its physical forms, whereas the term "sulfur-containing derivative" includes any sulfur-donating compound, but not elemental sulfur. Sulfur-donating compounds are well known in the art and include various organic compositions or compounds that generate sulfur under the mixing or preparation conditions of the present invention. In one non-limiting embodiment, the elemental sulfur is in powder form known as flowers of sulfur

. Other sulfur-containing derivatives or species that can be used in the invention include, but are not necessarily limited to mercaptobenzothiazole, thiurams, dithiocarbamates, and the like, and combinations thereof. In another non-limiting embodiment of the invention, the sulfur is present in an amount ranging from about 0.06% to about 0.3 wt.% based on the asphalt, and alternatively is present in an amount from about 0.08 to about 0.2 wt.%.

Acceptable crosslinkers include, but are not necessarily limited to, elemental sulfur and sulfur-containing derivatives. Mercaptobenzothiazole (MBT), mercaptobenzimidazole (MBI), thiurams, dithiocarbamates, and mixtures thereof are also suitable crosslinkers falling within the definition of sulfur-containing derivatives. It is common in the preparation of polymer-modified asphalts to include activators and accelerators to make the crosslinking reaction proceed faster. MBT is a conventional crosslinker accelerator. ZnO is also sometimes used to control the tendency of the polymer to gel. The zinc salt of mercaptobenzothiazole (ZMBT) combines features of both of these conventional additives.

One acceptable type of sulfur-containing derivatives includes, but is not limited to, thiuram polysulfides. Suitable thiuram polysulfides have the formula: 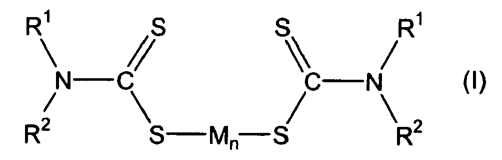 where R1 and R2 are the same or different alkyl substituents having from 1 to 4 carbon atoms, and wherein M is a metal selected from zinc, barium or copper, and n is 0 or 1. In another non-limiting embodiment of the invention, a crosslinking temperature range for thiuram polysulfides of formula (I) is above 180°C (356°F), alternatively, the crosslinking temperature range may be between about 185 and about 190°C (365-374°F). In one non-limiting embodiment of the invention, an optimal crosslinking temperature range for a particular crosslinker is determined empirically. In another non-limiting embodiment of the invention, the optimal crosslinking temperature range is 20°C wide, in one non-limiting embodiment of the invention 10°C wide, in another non-limiting embodiment 4°C wide, and in yet another non-limiting embodiment of the invention 5°C wide or less.

In one non-limiting embodiment of the invention, the crosslinker is present in an amount ranging from about 0.01 to 0.4 wt% active ingredients, based on the weight of the asphalt/polymer mixture. In another embodiment, the crosslinker is present in an amount ranging from about 0.05 to 0.3 wt%.

The term "desired Rheological Properties" refers primarily to the SUPERPAVE asphalt binder specification designated by AASHTO as MP1 which is hereby incorporated by reference in its entirety. Additional asphalt specifications can include viscosity at 140°F (60°C) of from 1600 to 4000 poise (160-400 Pa-s) before aging; a toughness of at least 110 inch-pound (127 cm-kilograms) before aging; a tenacity of at least 75 inch-pound (86.6 cm-kilograms) before aging; and a ductility of at least 25 cm at 39.2°F (4°C) at a 5 cm/min. pull rate after aging.

Viscosity measurements are made by using ASTM test method D2171. Ductility measurements are made by using ASTM test method D113. Toughness and tenacity measurements are made by a Benson Method of Toughness and Tenacity, run at 20 inches/minute (50.8 cm/minute) pull rate with a 1/8 inch (2.22 cm) diameter ball.

The term "aggregate" refers to rock and similar material added to the bitumen composition to provide an aggregate composition suitable for paving roads. Typically, the aggregate employed is rock indigenous to the area where the bitumen composition is produced. Suitable aggregate includes granite, basalt, limestone, and the like.

As used herein, the term "asphalt cement" refers to any of a variety of substantially solid or semi-solid materials at room temperature that gradually liquify when heated. Its predominant constituents are bitumens, which may be naturally occurring or obtained as the residue of refining processing.

The asphalt terms used herein are well known to those skilled in the art. For an explanation of these terms, reference is made to the booklet SUPERPAVE Series No. 1 (SP-1), 1997 printing, published by the Asphalt Institute (Research Park Drive, P.O. Box 14052, Lexington, KY 40512-4052), which is hereby incorporated by reference in its entirety. For example, Chapter 2 provides an explanation of the test equipment, terms, and purposes. Rolling Thin Film Oven (RTFO) and Pressure Aging Vessel (PAV) are used to simulate binder aging (hardening) characteristics. Dynamic Shear Rheometers (DSR) are used to measure binder properties at high and intermediate temperatures. This is used to predict permanent deformation or rutting and fatigue cracking. Bending Beam Rheometers (BBRs) are used to measure binder properties at low temperatures. These values predict thermal or low temperature cracking. The procedures for these experiments are also described in the above-referenced SUPERPAVE booklet.

Asphalt grading is given in accordance with accepted standards in the industry as discussed in the above-referenced Asphalt Institute booklet and MP1. For example, pages 62-65 of the booklet include a table entitled Performance Graded Asphalt Binder Specifications. The asphalt compositions are given performance grades, for example, PG 64-22. The first number, 64, represents the average 7-day maximum pavement design temperature in °C. The second number, -22, represents the minimum pavement design temperature in °C. Other requirements of each grade are shown in the table. For example, the test temperature for the PAV-DSR test (°C) for PG 64-22 is 25°C. PG test results shown herein are expressed in terms of the critical passing temperature in degrees Celsius, that is, the interpolated test temperature at which the rheological property is exactly equal to the required value.

In accordance with one non-limiting embodiment of the present invention, an asphalt composition is prepared by adding the asphalt or bitumen to a mixing tank that has stirring means. The asphalt is added and stirred at elevated temperatures. Stirring temperatures depend on the viscosity of the asphalt and can range up to 500°F (260°C). Asphalt products from refinery operations are well known in the art. For example, asphalts typically used for this process are obtained from deep vacuum distillation of crude oil to obtain a bottom product of the desired viscosity or from a solvent deasphalting process that yields a demetallized oil, a resin fraction and an asphaltene fraction. Some refinery units do not have a resin fraction. These materials or other compatible oils of greater than 450°F (232°C) flash point may be blended to obtain the desired viscosity asphalt. In polymer-modified asphalt (PMA) processing, care must be taken in not subjecting the asphalt/polymer composition to elevated temperatures for too long to avoid thermal degradation of the polymer.

Rubbers, elastomeric polymers, or thermoplastic elastomers suitable for this application are well known in the art as described above. For example, FINAPRENE^{®} SBS products available from Atofina Petrochemicals Inc. are suitable for the applications of the present invention. This example is not limiting for the inventive technology that can be applied to any similar elastomeric product particularly those produced from styrene and butadiene.

As noted, it has been discovered that an excess of certain organic and inorganic metal oxides may improve the compatibility of certain asphalts and polymers. There are some asphalts that are difficult or impossible to make compatible with rubber using standard crosslinking technology. There is some indication that acids present in the asphalt may interfere with vulcanization. Without wishing to be limited to any particular theory, it may be that the excess metal salt could neutralize the acids in the troublesome asphalts. In one non-limiting embodiment of the invention, the metal in the metal salt used as an activator may be selected from the group consisting of zinc, cadmium, mercury, copper, silver, nickel, platinum, iron, magnesium, and mixtures thereof. In another non-limiting embodiment of the invention, the metal is selected from Groups IIA and IIB of the Periodic Table (CAS notation). Other metal salts suitable for use in this invention besides metal oxides include, but are not necessarily limited to, carboxylates, nitrates, carbonates, hydrates, halides, phosphates, perchlorate, sulfates, sulphonates, and mixtures thereof. Specific examples of suitable metal oxides include, but are not necessarily limited to, zinc oxide, calcium oxide, magnesium oxide, iron oxide, copper oxide, and combinations thereof. Specific examples of suitable organic metal salts include, but are not necessarily limited to zinc stearate, calcium palmitate, magnesium citrate, and the like, and mixtures thereof. It is also expected that in some embodiments, other known accelerators, particularly ZMBT, when used in excess could also aid compatibility.

Generally, in one non-limiting embodiment, the amount of metal oxide may be at least 10 times (up to 5 wt %) what is normally used. The amount of metal oxide normally used depends upon a number of complex interrelated factors, including, but not necessarily limited to the type and proportions of asphalt and elastomeric polymer, the temperature at which the mixture is heated, the type of metal salt etc. To give some idea of proportions typically used, the amount of zinc oxide or other metal oxide normally used often ranges from about 0.01 to about 0.3 wt%, based on the mixture of asphalt and elastomeric polymer; in another non-limiting embodiment up to about 0.2 wt%. These proportions are when ZnO is used as an activator. Thus, in the case of zinc oxide, in some non-limiting cases, the amount of zinc oxide used in this invention ranges from about 0.1 wt% or even about 0.05 wt% up to about 5 wt%. In the embodiment of crosslinked PMA, generally the zinc oxide proportion is about half the crosslinker proportion. Thus, in another non-limiting embodiment of this invention, the excess amount of ZnO should be at least about 5 times greater than the crosslinker proportion. These proportions are expected to be effective for the other organic and inorganic metal salts of the invention.

In one definition of the invention, the "amount normally used" refers to the amount normally used to incorporate a particular polymer into asphalt for a particular asphalt grade, such as when the metal metal oxide is used as an accelerator.

It has also been discovered that excess metal salt can help homogenize ground tire rubber (GTR) in certain mixtures of polymer and asphalt, even if they are not crosslinked. In this embodiment, the level of excess metal metal oxide may not be as high as that described above, and may be about 8 times as much as is normally used.

GTR can be made by at least two processes. Ambient ground rubber is obtained by shredding and grinding (milling) the tire rubber at or above ordinary ambient temperature. This process produces a sponge-like surface on the granulated rubber crumbs which have considerably greater surface area for a given size particle than do cryogenically ground rubber particles. Increased surface area increases the reaction rate with hot asphalt. Cryogenically ground rubber is obtained by grinding (milling) the tire rubber at or below the embrittlement temperature (glass transition temperature, T_{g}) of the rubber (liquid nitrogen is often used for cooling). This process produces clean flat surfaces which, in turn, reduces the reaction rate with hot asphalt. According to some, the cryogenic process produces undesirable particle morphology (structure) and generally gives lower elastic recovery compared to the ambient ground rubber. Thus, in some non-limiting embodiments the GTR to be used is ambient ground tire rubber.

In one non-limiting embodiment of this invention, the amount of GTR in the PMA ranges from about 1 to about 20 wt% of the mixture of polymer and asphalt. Alternatively, in a different non-limiting embodiment the amount of GTR ranges from about 3 to about 10 wt%.

Various other additives suitable for the purposes of this invention include, but are not necessarily limited to, known and future accelerators, activators, and the like. A variety of accelerators may be used in conjunction with this invention, including, but not limited to, dithiocarbamates and mercaptobenzothiazoles.

The methods and compositions of this invention will be further illustrated with respect to particular Examples that are only intended to more fully illuminate the invention and not limit it in any way.

### Comparative examples 1-5 Example 6

A particular 64-22 Asphalt B was unexpectedly found to be incompatible with 4% FINAPRENE 502 elastomer (FP502) using the standard laboratory crosslinking formulation of 0.06 ZnO / 0.06 MBT / 0.12 Sulfur (as wt%). As shown in comparative Example 1 - 5, the original sample had a measured separation of 14.4°F (9.8°C), where the specification limit was 4°F (2°C). A repeat of this original formulation gave a measured separation of 18.0°F (7.8°C).

Additional blends at 4% FP502 were crosslinked with increased concentration of crosslinking agents. The results are presented in Table II. The blends with an increase of 50% and 100% ZnO/MBT did not produce compatible formulations (comparative Examples 1 and 2, respectively). The compatibilities of these two blends were approximately equal to the compatibilities of the initial blends with traditional levels of crosslinking agent. The blend with twice the crosslinking agent gelled. (comparative Example 3).

### Experimental Procedure

The blends were prepared according to the following method. The rubber was blended into the asphalt using high shear mixing at 2500 rpm and 350°F (177°C) for 45 minutes. The mixing was changed to low shear, and the crosslinking agents were added. Following the crosslinking agent addition, stirring continued at 350°F (177°C) and about 250 rpm for 1 hour. The mixture was placed in an oven at 325°F (163°C) for 24 hours. The mixtures were tested for compatibility at 48 hours by conventional methods.

**TABLE I**

| Use of Excess ZnO and MBT | | | |
|---|---|---|---|
| comparative Example No. | 1 | 2 | 3 |
| Asphalt B, wt% | 96.0 | 96.0 | 96.0 |
| FP502, wt% | 4.0 | 4.0 | 4.0 |
| ZnO, wt% | 0.09 | 0.12 | 0.12 |
| MBT, wt% | 0.09 | 0.12 | 0.12 |
| Sulfur, wt% | 0.12 | 0.12 | 0.24 |
| Top # S.P., of (°C) | 168.9 (76.1) | 169.6 (76.4) | Gelled |
| ΔT, °F(°C) | 16.1 (8.9) | 13.3 (7.4) | |

Three blends were trialed with excess ZnO in the crosslinking formulation. A blend with 12X concentration (0.72 wt%) of ZnO (comparative Example 4) produced a PMA formulation with a measured compatibility of 5.2°F (2.9°C). The concentration of ZnO was stepped down to 0.60 and then to 0.42 wt% (10X and 7X of traditional concentrations, comparative Example 5 and example 6 respectively). The compatibility results of these experiments are presented in Table III. The increased levels of ZnO produced PMA blends that were compatible (Example 6) or very close to the separation specification limit of 4°F (2°C) (comparative Examples 4 and 5).

**TABLE II**

| Compatibility of Asphalt B with Increased ZnO | | | |
|---|---|---|---|
| Example No. | 4 | 5 | 6 |
| Asphalt B, wt% | 96.0 | 96.0 | 96.0 |
| FP502, wt% | 4.0 | 4.0 | 4.0 |
| ZnO, wt% | 0.72 | 0.60 | 0.42 |
| MBT, wt% | 0.06 | 0.06 | 0.06 |
| Sulfur, wt% | 0.12 | 0.12 | 0.24 |
| Top # S.P., of (°C) | 165.5 (74.2) | 160.5 (71.4) | 160.5 (71.4) |
| ΔT, °F(°C) | 5.2 (2.9). | 4.7 (2.6) | 0.7 |

### Example 7

### Use of Excess ZnO to Improve the Compatibility of GTR

120/150 Penetration asphalt blendstock was used to blend a modified product used in seal coats. Production of the seal coat formulation involves milling ground tire rubber (GTR) and SBS copolymer into the 120/150 Penetration asphalt blendstock. The milled blendstock rubber concentrate was unusually lumpy. Samples of the screened asphalt/rubber product appeared to have "sticky" masses that were caught on the screens. End users complained that the finished product had a poor appearance, although the material met the target Penetration, Viscosity, and Softening Point specifications. The problem was diagnosed as incompatibility between the asphalt and the GTR/SBS rubbers.

A sample of the lumpy asphalt/rubber concentrate was treated with 0.5 wt% of ZnO in the laboratory and blended with high shear at 400°F (204°C) for 1 hour. The treated sample was screen filtered and tested for compliance to finished product specifications. The particle size of the sticky lumps was reduced to normal ranges and the product tested within target specification. The conclusion is that excess amounts of ZnO improved the compatibility of GTR in this asphalt.

In the foregoing specification, the invention has been described with reference to specific embodiments thereof, and has been demonstrated as effective in providing methods for preparing asphalt and polymer compositions with improved rubber compatibility through the use of excess amounts of organic and inorganic metal salts. However, it will be evident that various modifications and changes can be made to the method without departing from the broader spirit or scope of the invention as set forth in the appended claims. Accordingly, the specification is to be regarded in an illustrative rather than a restrictive sense. For example, specific combinations or amounts of asphalt, polymer, crosslinkers, metal salts, GTR and other components falling within the claimed parameters, but not specifically identified or tried in a particular PMA system or GTR system, are anticipated and expected to be within the scope of this invention. Specifically, the method and discovery of the invention are expected to work with crosslinkers, rubber polymers and ground tire rubber other than those exemplified herein.

## Claims

1. A method for preparing asphalt and polymer compositions comprising:
heating a mixture of asphalt and an elastomeric polymer; and
adding a metal oxide in excess of amounts of an organic or inorganic metal salt used as an activator, where the metal of the metal oxide is selected from the group consisting of zinc, cadmium, mercury, copper, silver, nickel, platinum, iron, magnesium, and mixtures thereof, and where the amount of metal oxide is over 0.3 wt% up to 5 wt% based on the weight of asphalt/polymer mixture, further comprising adding a crosslinker to the mixture, where the crosslinker is selected from the group consisting of a sulfur-containing derivative and elemental sulfur and mixtures thereof.

2. The method of claim 1 where the metal oxide is selected from the group consisting of zinc oxide, calcium oxide and combinations thereof.

3. The method of claim 2 where the metal oxide is zinc oxide.

4. The method of claim 1 where in adding the crosslinker, the crosslinker is selected from the group consisting of elemental sulfur, mercaptobenzothiazole (MBT), thiurams, dithiocarbamates, mercaptobenzimidazole, and mixtures thereof.

5. The method of claim 1 where the metal oxide proportion is at least five times greater than the crosslinker proportion.

6. The method of claim 1 where the crosslinker is present in an amount ranging from 0.01 to 0.4 wt%, based on the weight of the asphalt/polymer mixture.

7. The method of claim 1 further comprising adding ground tire rubber (GTR) to the mixture of asphalt and an elastomeric polymer, before or after the metal oxide is added.

8. The method of claim 7 where the amount of GTR ranges from 1 to 20 wt % of the mixture.

9. The method of claim 8 where the metal oxide is zinc oxide and the zinc oxide is added in an amount at least 8 times more than that used as an activator.

10. A method of road building comprising combining the asphalt and polymer composition made by the method of claim 1 with an aggregate to form a road paving material, and using the material to form road pavement.

11. A method of sealing a roof comprising heating the asphalt and polymer composition made by the method of claim 1 and distributing it over at least a portion of a roof surface.

12. A polymer modified asphalt (PMA) comprising:
an asphalt;
an elastomeric polymer; and
a metal oxide present in an amount in excess of an amount of metal salt used as an activator, where the metal of the metal oxide is selected from the group consisting of zinc, cadmium, mercury, copper, silver, nickel, platinum, iron, magnesium, and mixtures thereof, and where the amount of metal oxide is over 0.3 wt% up to 5 wt% based on the weight of the asphalt/polymer mixture.

13. The PMA of claim 12 where the metal oxide is selected from the group consisting of zinc oxide, calcium oxide and combinations thereof.

14. The PMA of claim 13 further comprising a crosslinker, where the crosslinker is selected from the group consisting of a sulfur-containing derivative and elemental sulfur and mixtures thereof.

15. The PMA of claim 14 where the crosslinker is selected from the group consisting of elemental sulfur, mercaptobenzothiazole (MBT), thiurams, dithiocarbamates, mercaptobenzimidazole, and mixtures thereof.

16. The PMA of claim 14 where the metal salt proportion is at least about five times greater than the crosslinker proportion.

17. The PMA of claim 14 where the crosslinker is present in an amount ranging from 0.01 to 0.1 wt%, based on the weight of the asphalt/polymer mixture.

18. The PMA of claim 12 further comprising ground tire rubber (GTR).

19. The PMA of claim 18 where the amount of GTR ranges from 1 to 20 wt% of the PMA.

20. The PMA of claim 18 where the metal oxide is zinc oxide and the zinc oxide is added in an amount at least 8 times more than that used as an activator.

21. A road made from the PMA of claim 12 and aggregate.

22. A roof sealed with the PMA of claim 12.

## Patentansprüche

1. Verfahren zur Herstellung von Asphalt- und Polymerzusammensetzungen, umfassend:
Erwärmen einer Mischung von Asphalt und einem elastomeren Polymer; und
Zugeben eines Metalloxids im Überschuß zu Mengen eines organischen oder anorganischen Metallsalzes, das als Aktivator verwendet wird, worin das Metall des Metalloxids ausgewählt ist aus der Gruppe bestehend aus Zink, Cadmium, Quecksilber, Kupfer, Silber, Nickel, Platin, Eisen, Magnesium und Mischungen hiervon, und worin die Menge des Metalloxids größer als 0,3 Gew.% bis zu 5 Gew.% beträgt, bezogen auf das Gewicht der Asphalt/Polymer-Mischung, ferner umfassend die Zugabe eines Vernetzers zu der Mischung, worin der Vernetzer ausgewählt ist aus der Gruppe bestehend aus schwefelhaltigen Derivaten und elementarem Schwefel und Mischungen hiervon.

2. Verfahren gemäß Anspruch 1, worin das Metalloxid aus der Gruppe ausgewählt ist bestehend aus Zinkoxid, Calciumoxid und Kombinationen hiervon.

3. Verfahren gemäß Anspruch 2, worin das Metalloxid Zinkoxid ist.

4. Verfahren gemäß Anspruch 1, wobei beim Zugeben des Vernetzers der Vernetzer aus der Gruppe ausgewählt ist bestehend aus elementarem Schwefel, Mercaptobenzothiazol (MBT), Thiuramen, Dithiocarbamaten, Mercaptobenzimidazolen und Mischungen hiervon.

5. Verfahren gemäß Anspruch 1, worin der Anteil des Metalloxids mindestens 5-mal größer als der Anteil des Vernetzers ist.

6. Verfahren gemäß Anspruch 1, worin der Vernetzer in einer Menge im Bereich von 0,01 bis 0,4 Gew.% vorliegt, bezogen auf das Gewicht der Asphalt/Polymer-Mischung.

7. Verfahren gemäß Anspruch 1, ferner umfassend die Zugabe von gemahlenem Reifenkautschuk bzw. -gummi (GTR) zu der Mischung von Asphalt und einem elastomeren Polymer, vor oder nachdem das Metalloxid zugegeben wird.

8. Verfahren gemäß Anspruch 7, worin die Menge von GTR im Bereich von 1 bis 20 Gew.% der Mischung liegt.

9. Verfahren gemäß Anspruch 8, worin das Metalloxid Zinkoxid ist und das Zinkoxid in mindestens 8-facher Menge von demjenigen, das als Aktivator verwendet wird, zugegeben wird.

10. Verfahren zum Straßenbau, umfassend das Zusammenbringen der Asphalt- und Polymer-Zusammensetzung, hergestellt durch das Verfahren gemäß Anspruch 1, mit einem Zuschlagstoff, um ein Straßenbelagsmaterial zu bilden, und Verwenden des Materials, um einen Straßenbelag zu bilden.

11. Verfahren zum Versiegeln/Abdichten eines Daches, umfassend das Erwärmen der Asphalt- und Polymerzusammensetzung, hergestellt mit dem Verfahren gemäß Anspruch 1, und Verteilen hiervon über zumindest einen Teil einer Dachoberfläche.

12. Polymer-modifizierter Asphalt (PMA) umfassend:
einen Asphalt;
ein elastomeres Polymer; und
ein Metalloxid, das in einer Menge im Überschuß zur Menge eines Metallsalzes, das als Aktivator verwendet wird, vorliegt, worin das Metall des Metalloxids ausgewählt ist aus der Gruppe bestehend aus Zink, Cadmium, Quecksilber, Kupfer, Silber, Nickel, Platin, Eisen, Magnesium und Mischungen hiervon, und worin die Menge des Metalloxids größer als 0,3 Gew.% bis 5 Gew.% beträgt, bezogen auf das Gewicht der Asphalt/Polymer-Mischung.

13. PMA gemäß Anspruch 12, worin das Metalloxid ausgewählt ist aus der Gruppe bestehend aus Zinkoxid, Calciumoxid und Kombinationen hiervon.

14. PMA gemäß Anspruch 13, ferner umfassend einen Vernetzer, worin der Vernetzer ausgewählt ist aus der Gruppe bestehend aus schwefelhaltigen Derivaten und elementarem Schwefel sowie Mischungen hiervon.

15. PMA gemäß Anspruch 14, worin der Vernetzer ausgewählt ist aus der Gruppe bestehend aus elementarem Schwefel, Mercaptobenzothiazol (MBT), Thiuramen, Dithiocarbamaten, Mercaptobenzimidazolen und Mischungen hiervon.

16. PMA gemäß Anspruch 14, worin der Anteil des Metallsalzes mindestens 5-mal größer als der Anteil des Vernetzers ist.

17. PMA gemäß Anspruch 14, worin der Vernetzer in einer Menge im Bereich von 0,01 bis 0,1 Gew.% vorliegt, bezogen auf das Gewicht der Asphalt/Polymer-Mischung.

18. PMA gemäß Anspruch 12, ferner umfassend gemahlenen Reifenkautschuk bzw. -gummi (GTR).

19. PMA gemäß Anspruch 18, worin die Menge von GTR im Bereich von 1 bis 20 Gew.% des PMA liegt.

20. PMA gemäß Anspruch 18, worin das Metalloxid Zinkoxid ist und das Zinkoxid in einer mindestens 8-fachen Menge von demjenigen, das als Aktivator verwendet wird, zugegeben wird.

21. Straße, hergestellt mit dem PMA von Anspruch 12 und einem Zuschlagstoff.

22. Dach, versiegelt/abgedichtet mit dem PMA gemäß Anspruch 12.

## Revendications

1. Procédé de préparation de compositions de polymère et d'asphalte comprenant :
le chauffage d'un mélange d'asphalte et de polymère élastomère ; et
l'ajout d'un oxyde métallique dans une quantité dépassant une quantité de sel métallique organique ou inorganique utilisé comme activateur, le métal de l'oxyde métallique étant choisi dans le groupe constitué de zinc, cadmium, mercure, cuivre, argent, nickel, platine, fer, magnésium et mélanges de ceux-ci, et la quantité de l'oxyde métallique allant de 0,3 % en poids à 5 % en poids par rapport au poids du mélange asphalte/polymère, comprenant en outre l'ajout d'un agent de réticulation au mélange, l'agent de réticulation étant choisi dans le groupe constitué d'un dérivé contenant du soufre et de soufre élémentaire et des mélanges de ceux-ci.

2. Procédé selon la revendication 1, dans lequel l'oxyde métallique est choisi dans le groupe constitué d'oxyde de zinc, oxyde de calcium et combinaisons de ceux-ci.

3. Procédé selon la revendication 2, dans lequel l'oxyde métallique est un oxyde de zinc.

4. Procédé selon la revendication 1, dans lequel lors de l'ajout de l'agent de réticulation, l'agent de réticulation est choisi dans le groupe constitué de soufre élémentaire, mercaptobenzothiazole (MBT), thiurames, dithiocarbamates, mercaptobenzimidazole et mélanges de ceux-ci.

5. Procédé selon la revendication 1, dans lequel la proportion d'oxyde métallique est au moins cinq fois supérieure à la proportion d'agent de réticulation.

6. Procédé selon la revendication 1, dans lequel l'agent de réticulation est présent dans une quantité allant de 0,01 à 0,4 % en poids, par rapport au poids du mélange d'asphalte/polymère.

7. Procédé selon la revendication 1, comprenant en outre l'ajout de caoutchouc de pneu broyé (GTR) au mélange d'asphalte et de polymère élastomère, avant ou après ajout de l'oxyde métallique.

8. Procédé selon la revendication 7, dans lequel la quantité de GTR va de 1 à 20 % en poids du mélange.

9. Procédé selon la revendication 8, dans lequel l'oxyde métallique est de l'oxyde de zinc et l'oxyde de zinc est ajouté dans une quantité au moins 8 fois supérieure à celle utilisée comme activateur.

10. Procédé de construction de route comprenant la combinaison de la composition d'asphalte et de polymère réalisée grâce au procédé de la revendication 1 avec un agrégat pour former un matériau de pavage de route, et l'utilisation du matériau pour former la chaussée.

11. Procédé d'étanchéisation de toiture comprenant le chauffage de la composition d'asphalte et de polymère réalisée grâce au procédé de la revendication 1 et la répartition de celle-ci sur au moins une partie d'une surface de toiture.

12. Asphalte modifié aux polymères (PMA) comprenant :
un asphalte ;
un polymère élastomère ; et
un oxyde métallique présent dans une quantité dépassant une quantité de sel métallique utilisé comme activateur, le métal de l'oxyde métallique étant choisi dans le groupe constitué de zinc, cadmium, mercure, cuivre, argent, nickel, platine, fer, magnésium et mélanges de ceux-ci, et la quantité d'oxyde métallique allant de 0,3 % en poids à 5 % en poids par rapport au poids du mélange asphalte/polymère.

13. PMA selon la revendication 12, dans lequel l'oxyde métallique est choisi dans le groupe constitué d'oxyde de zinc, oxyde de calcium et combinaisons de ceux-ci.

14. PMA selon la revendication 13, comprenant en outre un agent de réticulation, l'agent de réticulation étant choisi dans le groupe constitué d'un dérivé contenant du soufre et de soufre élémentaire et des mélanges de ceux-ci.

15. PMA selon la revendication 14, dans lequel l'agent de réticulation est choisi dans le groupe constitué de soufre élémentaire, mercaptobenzothiazole (MBT), thiurames, dithiocarbamates, mercaptobenzimidazole et mélanges de ceux-ci.

16. PMA selon la revendication 14, dans lequel la proportion de sel métallique est au moins environ cinq fois supérieure à la proportion d'agent de réticulation.

17. PMA selon la revendication 14, dans lequel l'agent de réticulation est présent dans une quantité allant de 0,01 à 0,1 % en poids par rapport au poids du mélange d'asphalte/polymère.

18. PMA selon la revendication 12, comprenant en outre du caoutchouc de pneu broyé (GTR).

19. PMA selon la revendication 18, dans lequel la quantité de GTR va de 1 à 20 % en poids du PMA.

20. PMA selon la revendication 18, dans lequel l'oxyde métallique est de l'oxyde de zinc et l'oxyde de zinc est ajouté dans une quantité au moins 8 fois supérieure à celle utilisée comme activateur.

21. Route réalisée à partir de PMA selon la revendication 12 et d'agrégat.

22. Toiture étanchéisée avec le PMA selon la revendication 12.
